# EUROPEAN PATENT APPLICATION

(11) **EP 3 272 503 A1**
(43) Date of publication of application: **24.01.2018**
(21) Application number: 15885571.8
(22) Date of filing: 13.11.2015
(51) Int. Cl.: B29C 65/16, B29C 65/56

(54) **JOINED SYNTHETIC RESIN BODY, AND PRODUCTION METHOD THEREFOR**

(30) Priority: 18.03.2015 JP 2015055204
(71) Applicant: Taiho Kogyo Co., Ltd, Toyota-shi, Aichi 471-8502 (JP)
(72) Inventor: UENO, Yuzo, Aichi 471-8502 (JP); KAWAHARA, Masahiro, Aichi 471-8502 (JP)
(74) Representative: Kuhnen & Wacker
(86) International application number: PCT/JP2015/081945
(87) International publication number: WO 2016/147479

(57) **Abstract**

There are provided a synthetic resin joined body and a method of manufacturing the same, with which it is possible to secure both of sealing performance of a fluid passage and joint strength between synthetic resin parts, even if an area of a portion to be welded is reduced.

The synthetic resin joined body includes: a baffle plate 110; an oil passage forming member 120 which comes in contact with the baffle plate 110; an oil passage 130 which is formed between the baffle plate 110 and the oil passage forming member 120 and through which lubricant flows; a sealing portion 140 which is formed by welding the baffle plate 110 and the oil passage forming member 120 to each other on an outer side of the oil passage 130 to seal a periphery of the oil passage 130; and a joint portion 150 for joining the baffle plate 110 and the oil passage forming member 120 to each other.

## Description

### TECHNICAL FIELD

The present invention relates to a synthetic resin joined body formed by welding synthetic resin parts to each other and a method of manufacturing the same.

### BACKGROUND ART

Conventionally, there is a known technique of a synthetic resin joined body formed by welding synthetic resin parts to each other. An example of the technique is disclosed in Patent Literature 1.

In Patent Literature 1, a synthetic resin joined body (laser-welded structure) including a baffle plate which is disposed in a cylinder head cover of an engine and which is in a rectangular flat plate shape and a flow passage forming member which is brought in contact with (laid over) the baffle plate from below to form an oil passage is disclosed. The baffle plate and the flow passage forming member are welded to each other at a welding portion (a contact face of the fluid passage forming member) adjacent to the oil passage.

In the synthetic resin joined body formed in this manner, the welding portion performs two functions, i.e., securing sealing performance of the oil passage and securing joint strength between the baffle plate and the flow passage forming member.

However, in the synthetic resin joined body described in Patent Literature 1, a certain or larger welding area of the welding portion is necessary to secure the joint strength by the welding portion. Therefore, it takes time to melt the welding portion, which results in a longer welding time.

### CITATION LIST

### PATENT LITERATURE

Patent Literature 1: Japanese Patent Application Laid-open No. 2007-127014

### SUMMARY OF INVENTION

### TECHNICAL PROBLEM

The present invention has been made with the above circumstances in view and it is an object of the invention to provide a synthetic resin joined body and a method of manufacturing the same, in which it is possible to secure both sealing performance of a flow passage and joint strength between synthetic resin parts even if an area of a portion to be welded is reduced.

### SOLUTION TO PROBLEM

The problem to be solved by the present invention is as described above and solutions to the problem will be described next.

In other words, a synthetic resin joined body according to an aspect of the invention includes: a first synthetic resin part; a second synthetic resin part which comes in contact with the first synthetic resin part; a flow passage which is formed between the first synthetic resin part and the second synthetic resin part and through which fluid flows; a sealing portion which is formed by welding the first synthetic resin part and the second synthetic resin part to each other on an outer side of the flow passage to seal a periphery of the flow passage; and a joint portion for joining the first synthetic resin part and the second synthetic resin part to each other.

The sealing portion is disposed so as to be positioned between the flow passage and the joint portion.

The joint portion is disposed along the flow passage.

The joint portion is disposed along an outer periphery of the sealing portion.

The first synthetic resin part is a baffle plate which is disposed on a cylinder head cover, the second synthetic resin part is an oil passage forming member including a recessed portion recessed to an opposite side from the baffle plate, the flow passage is an oil passage through which lubricant flows, and the oil passage is formed by the recessed portion and the baffle plate by joining the oil passage forming member to one face of the baffle plate.

A method of manufacturing a synthetic resin joined body according to another aspect of the invention includes: a transmission-side synthetic resin part preparing step of preparing a laser light transmissive transmission-side synthetic resin part including a first flow passage forming portion for forming one part of a flow passage through which fluid flows; an absorption-side synthetic resin part preparing step of preparing a laser light absorbing absorption-side synthetic resin part including a second flow passage forming portion for forming the other part of the flow passage and a welding portion which is formed into a protruding shape at a periphery of the second flow passage forming portion; a disposing step of disposing the transmission-side synthetic resin part and the absorption-side synthetic resin part so that the first flow passage forming portion and the second flow passage forming portion are laid over each other to form the flow passage and that the welding portion comes in contact with the transmission-side synthetic resin part; a sealing step of radiating laser light to the welding portion from a side of the transmission-side synthetic resin part to melt the welding portion to thereby weld the welding portion and the transmission-side synthetic resin part to each other to seal a periphery of the flow passage; and a joining step of joining the transmission-side synthetic resin part and the absorption-side synthetic resin part to each other.

In the method of manufacturing the synthetic resin joined body according to the other aspect of the invention, the transmission-side synthetic resin part on which one of a protruding portion and a through hole is formed is prepared in the transmission-side synthetic resin part preparing step, the absorption-side synthetic resin part on which the other of protruding portion and the through hole is formed is prepared in the absorption-side synthetic resin part preparing step, the transmission-side synthetic resin part and the absorption-side synthetic resin part are disposed so that the protruding portion is inserted through the through hole in the disposing step, and the transmission-side synthetic resin part and the absorption-side synthetic resin part are joined to each other by staking the protruding portion in the joining step.

In the method of manufacturing the synthetic resin joined body according to the other aspect of the invention, an outer portion of the welding portion of the absorption-side synthetic resin part and the transmission-side synthetic resin part are joined to each other in the joining step.

The flow passage is an oil passage through which the lubricant flows, the transmission-side synthetic resin part is a baffle plate which is disposed on a cylinder head cover, the absorption-side synthetic resin part is an oil passage forming member for forming the oil passage between the baffle plate and the oil passage forming member, and the second flow passage forming portion of the oil passage forming member is recessed in an opposite direction to a protruding direction of the welding portion.

### ADVANTAGEOUS EFFECTS OF INVENTION

As effects of the aspects of the present invention, the following effects are exerted.

In the synthetic resin joined body according to the one aspect of the invention, even if an area of the portion to be welded is reduced, it is possible to secure both of sealing performance of the flow passage and joint strength between the synthetic resin parts (the first synthetic resin part and the second synthetic resin part).

In the synthetic resin joined body according to the one aspect of the invention, it is possible to prevent the fluid from reaching the joint portion.

In the synthetic resin joined body according to the one aspect of the invention, it is possible to secure the joint strength between the first synthetic resin part and the second synthetic resin part along the flow passage.

In the synthetic resin joined body according to the one aspect of the invention, it is possible to secure the joint strength between the first synthetic resin part and the second synthetic resin part along the outer periphery of the sealing portion.

In the synthetic resin joined body according to the one aspect of the invention, even if the area of the portion to be laser-welded is reduced, it is possible to secure both of the sealing performance of the oil passage and the joint strength between the baffle plate and the oil passage forming member.

In the method of manufacturing the synthetic resin joined body according to the other aspect of the invention, even if the area of the portion to be laser-welded is reduced, it is possible to secure both of the sealing performance of the fluid passage and the joint strength between the synthetic resin parts (the transmission-side synthetic resin part and the absorption-side synthetic resin part).

In the method of manufacturing the synthetic resin joined body according to the other aspect of the invention, the transmission-side synthetic resin part and the absorption-side synthetic resin part can be joined to each other and the transmission-side synthetic resin part and the absorption-side synthetic resin part can be positioned with respect to each other.

In the method of manufacturing the synthetic resin joined body according to the other aspect of the invention, it is possible to prevent the fluid from reaching the portion joined in the joining step.

In the method of manufacturing the synthetic resin joined body according to the other aspect of the invention, even if the area of the portion to be laser-welded is reduced, it is possible to secure both of the sealing performance of the oil passage and the joint strength between the baffle plate and the oil passage forming member.

### BRIEF DESCRIPTION OF DRAWINGS

Fig. 1 is a cross-sectional view of an inside of a cylinder head cover of an engine and shows a state of use of a baffle plate and an oil passage forming member according to an embodiment of the present invention.
Fig. 2(a) is a bottom view of the baffle plate and Fig. 2(b) is a front view of the baffle plate.
Fig. 3 is a plan view of the oil passage forming member.
Fig. 4 is a plan view of a joined body formed by the baffle plate and the oil passage forming member.
Fig. 5 is a cross-sectional view taken along line A-A in Fig. 4.
Fig. 6 is a flowchart of a method of manufacturing the joined body formed by the baffle plate and the oil passage forming member according to the embodiment of the invention.
Fig. 7 is a partial cross-sectional view showing the baffle plate and the oil passage forming member in a disposing step.
Fig. 8 is a partial cross-sectional view showing the baffle plate and the oil passage forming member in a sealing step.
Fig. 9 is a partial cross-sectional view showing the baffle plate and the oil passage forming member in a joining step.

### DESCRIPTION OF EMBODIMENT

Directions shown by arrows U, D, F, B, L, and R in the diagrams are respectively defined as an upward direction, a downward direction, a forward direction, a backward direction, a leftward direction, and a rightward direction and a description will be given below.

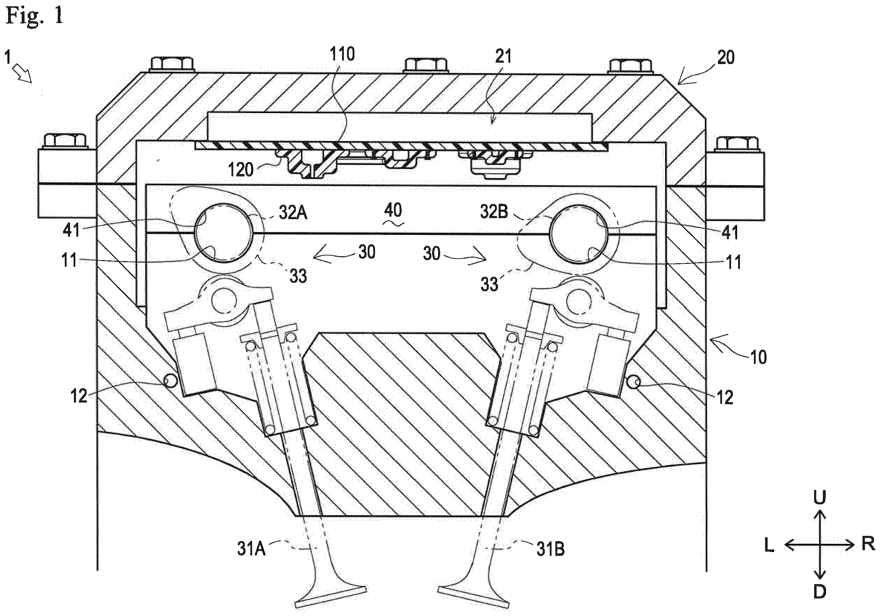

First, by using Fig. 1, a structure of an engine 1 including a baffle plate 110 and an oil passage forming member 120 according to an embodiment of the present invention will be described.

The engine 1 according to the embodiment includes valve gears 30, which will be described later, on both of an intake side and an exhaust side. Because structures of the valve gears 30 on the intake side and the exhaust side are substantially the same, the structure on the exhaust side (the structure on a left side in Fig. 1) will be mainly described and the structure on the intake side (the structure on a right side in Fig. 1) will be omitted appropriately for convenience of description.

The engine 1 mainly includes a cylinder head 10, a cylinder head cover 20, the valve gear 30, a cam cap 40, the baffle plate 110, and the oil passage forming member 120.

The cylinder head 10 along with a cylinder block (not shown) forms a main structural body of the engine 1. The cylinder head 10 is fixed to an upper portion of the cylinder block. The cylinder head 10 mainly includes cylinder head-side bearing portions 11 and oil galleries 12.

The cylinder head-side bearing portion 11 supports an exhaust-side camshaft 32A (described later) from below so that the exhaust-side camshaft 32A can rotate. The cylinder head-side bearing portion 11 is formed in a left portion of the cylinder head 10 to form a semicircular recess with an upper side open in front view.

The oil gallery 12 is an oil passage for feeding lubricant to respective portions of the engine 1. The oil gallery 12 is formed to pass through a left wall of the cylinder head 10 in a front-back direction.

The cylinder head cover 20 covers an upper portion of the cylinder head 10. The cylinder head cover 20 is formed in a shape of a bowl with a lower side open. The cylinder head cover 20 is placed on the upper portion of the cylinder head 10 and suitably fixed with bolts or the like. The baffle plate 110 (described later) is mounted to an inner side of the cylinder head cover 20 to form an oil separator chamber 21. The oil separator chamber 21 can store blow-by gas and cause the gas to flow back to an intake system after carrying out oil dropping.

The valve gear 30 is for opening and closing exhaust ports (not shown) of the engine 1 at predetermined times. The valve gear 30 mainly includes exhaust valves 31A and the exhaust-side camshaft 32A.

The exhaust valves 31A are for opening and closing the exhaust ports (not shown) of the engine 1. Each of the exhaust valves 31A is disposed with its longitudinal direction oriented substantially in a vertical direction. A lower end of the exhaust valve 31A extends to the exhaust port. A middle portion of the exhaust valve 31A in the vertical direction is inserted through the cylinder head 10 to be able to slide.

The exhaust-side camshaft 32A is for driving the valve gear 30 for opening and closing. The exhaust-side camshaft 32A is placed on the cylinder head-side bearing portion 11 of the cylinder head 10 with its longitudinal direction oriented substantially in the front-back direction. The exhaust-side camshaft 32A includes cams 33.

Each of the cams 33 is a portion formed in a plate shape having an irregular distance from a center of rotation (center of the exhaust-side camshaft 32A) to an outer periphery. The cam 33 is disposed in a position corresponding to each of cylinders in the front-back direction. The cam 33 is disposed above the exhaust valve 31A. The cam 33 rotates about an axial center of the exhaust-side camshaft 32A to thereby cause the exhaust valve 31A to slide in the vertical direction with respect to the cylinder head 10.

The cam cap 40 is fixed to the upper portion of the cylinder head 10 to retain the exhaust-side camshaft 32A between the cylinder head 10 and the cam cap 40. The cam cap 40 is formed in a substantially rectangular parallelepiped shape with its longitudinal direction oriented in the left-right direction. The cam cap 40 mainly includes a cam cap-side bearing portion 41.

The cam cap-side bearing portion 41 supports the exhaust-side camshaft 32A from above so that the exhaust-side camshaft 32A can rotate. The cam cap-side bearing portion 41 is formed in a left portion of the cam cap 40 to form a semicircular recess with a lower side open in front view. The cam cap-side bearing portion 41 is formed in a position facing the cylinder head-side bearing portion 11 in the cylinder head 10 and cooperates with the cylinder head-side bearing portion 11 to rotatably support the exhaust-side camshaft 32A.

Although it is not described concretely, the engine 1 having the above-described structure includes, as an intake-side structure (structure on a right side in Fig. 1), the (intake-side) valve gear 30 for opening and closing intake ports (not shown) of the engine 1 at predetermined times. The intake-side valve gear 30 includes intake valves 31B for opening and closing the intake ports (not shown) of the engine 1 and an intake-side camshaft 32B for driving the intake-side valve gear 30 for opening and closing as shown in Fig. 1.

By using Figs. 1 to 5, structures of the baffle plate 110 and the oil passage forming member 120 will be described below in detail.

The baffle plate 110 shown in Figs. 1, 2, 4, and 5 is a member for defining the oil separator chamber 21. The baffle plate 110 is formed in a rectangular plate shape. The baffle plate 110 is mounted to the inner side of the cylinder head cover 20. The baffle plate 110 is disposed with its longitudinal direction oriented in the front-back direction and its plate faces facing in the vertical direction. The baffle plate 110 has protruding portions 111 and an oil passage forming face 112.

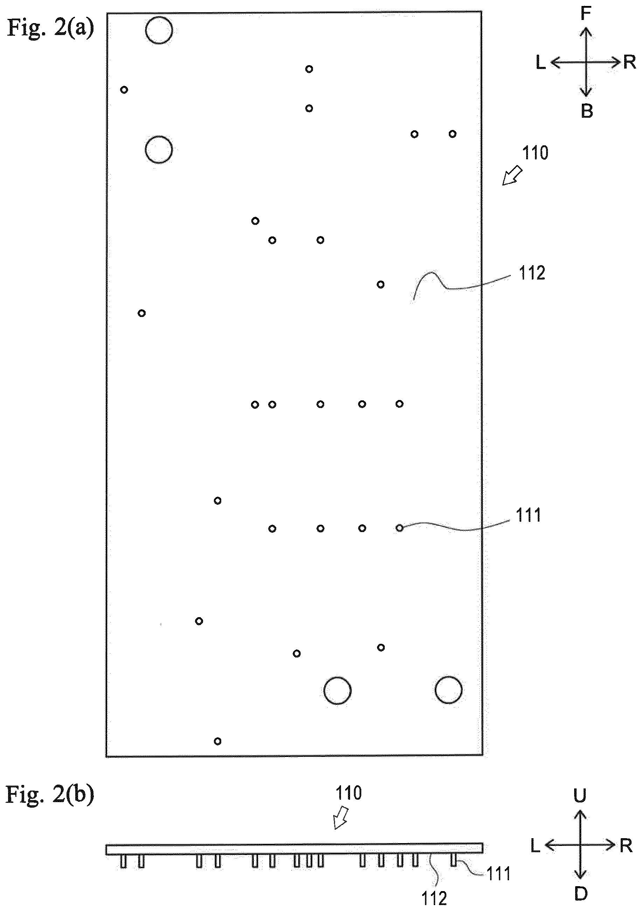

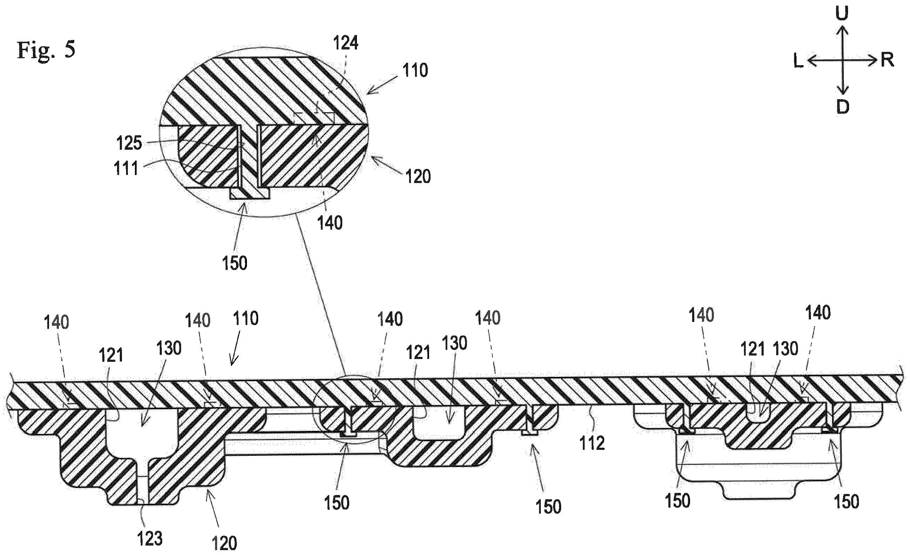

The protruding portions 111 shown in Figs. 2(a), 2(b), and 5 are for joining the baffle plate 110 and the oil passage forming member 120 (described later). The protruding portions 111 are formed in circular columnar shapes. The protruding portions 111 are formed to extend downward from a bottom face (the oil passage forming face 112 described later) of the baffle plate 110. The plurality of protruding portions 111 are formed respectively in positions overlapping through holes 125 (described later) in the oil passage forming member 120.

The oil passage forming face 112 shown in Figs. 2(a), 2(b), and 5 is a face forming a part of an oil passage 130 described later. The oil passage forming face 112 is a lower face (bottom face) of the baffle plate 110. The oil passage forming face 112 is formed in a planar shape. The protruding portions 111 are formed on the oil passage forming face 112.

The oil passage forming member 120 shown in Figs. 1 and 3 to 5 is a member for forming a lubricant feed path for feeding the lubricant to predetermined lubrication portions. The oil passage forming member 120 has such an outside shape in plan view as to surround a periphery of the lubricant feed path. The oil passage forming member 120 is formed in a plate shape with its central portion (portion corresponding to the lubricant feed path) protruding downward (see Fig. 5). The oil passage forming member 120 is fixed to a bottom face of the baffle plate 110. The oil passage forming member 120 includes a recessed portion 121, an introduction port 122, discharge ports 123, a welding portion 124, and a through hole 125.

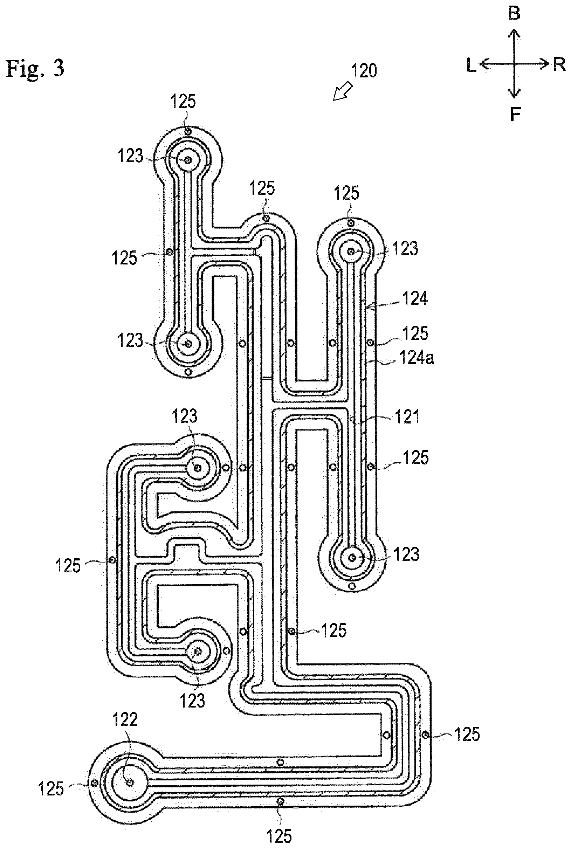

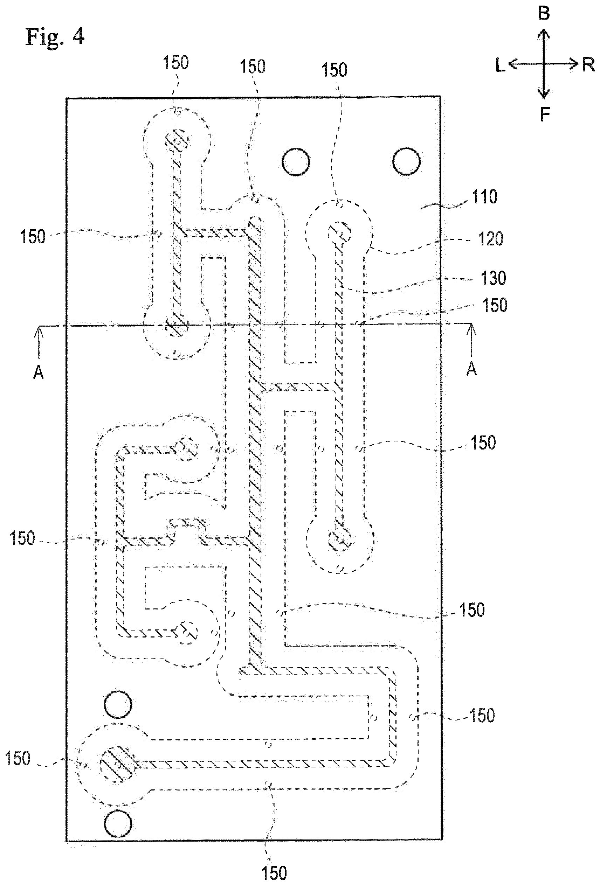

The recessed portion 121 shown in Figs. 3 and 5 forms a part of the oil passage 130 described later. The recessed portion 121 is formed with its portion corresponding to the lubricant feed path recessed downward (in an opposite direction to a protruding direction of the welding portion 124 described later). The recessed portion 121 is branched so as to form end portions in positions corresponding to the predetermined lubrication portions. With the oil passage forming member 120 fixed to the oil passage forming face 112 of the baffle plate 110, the recessed portion 121 forms the oil passage 130 (see Fig. 5) between the baffle plate 110 and the oil passage forming member 120. In other words, the oil passage forming face 112 forms an upper wall of the oil passage 130 and the recessed portion 121 forms side walls and a bottom wall of the oil passage 130. The oil passage 130 is formed in a hatched area in Fig. 4 so as to feed the lubricant from the oil gallery 12 fed through a predetermined oil passage to the predetermined lubrication portions (e.g., the cams 33).

The introduction port 122 shown in Fig. 3 is a portion for introducing the lubricant into the oil passage 130. The introduction port 122 is formed to extend downward from a bottom face of the recessed portion 121 to pass through the oil passage forming member 120 in the vertical direction. The introduction port 122 is formed near a front left end portion of the oil passage forming member 120. The introduction port 122 communicates with the oil gallery 12 through the predetermined oil passage.

The discharge ports 123 shown in Figs. 3 and 5 are portions for discharging the lubricant flowing through the oil passage 130 to the predetermined lubrication portions. The discharge ports 123 are formed to extend downward from the bottom face of the recessed portion 121 to pass through the oil passage forming member 120 in the vertical direction. The discharge ports 123 are respectively formed at the respective end portions (positions corresponding to the predetermined lubrication portions) of the recessed portion 121 (oil passage 130). To put it concretely, the discharge ports 123 are formed above the cams 33.

The welding portion 124 shown in Figs. 3 and 5 is a portion to be welded to the baffle plate 110. Before the oil passage forming member 120 is welded to the baffle plate 110, the welding portion 124 is formed in a protruding shape on an upper face of the oil passage forming member 120 (face facing the baffle plate 110). The welding portion 124 is formed in a hatched area in Fig. 3 to extend from a position near a front end to a position near a back end of the oil passage forming member 120 in plan view. To put it concretely, the welding portion 124 is formed to lay a closed trail on an outer side of the recessed portion 121 along the recessed portion 121 in plan view.

The through holes 125 shown in Figs. 3 and 5 are for joining the baffle plate 110 and the oil passage forming member 120. The through holes 125 are formed to pass through the oil passage forming member 120 in the vertical direction. The through holes 125 are formed on an outer side of the welding portion 124. To put it concretely, the through holes 125 are formed on the outer side of an area surrounded with the welding portion 124 in plan view. In other words, the through holes 125 are disposed so that the welding portion 124 is positioned between the recessed portion 121 and the through holes 125. The through holes 125 are disposed along an outer periphery of the welding portion 124. The plurality of through holes 125 are formed at intervals in a direction along the outer periphery of the welding portion 124. Through the through holes 125, the protruding portions 111 are to be inserted. Each of the through holes 125 is formed so as to have a larger diameter than each of the protruding portions 111 and leave as small a clearance as possible between an inner wall of the through hole 125 and an outer wall of the protruding portion 111.

By laying the baffle plate 110 and the oil passage forming member 120 over each other in the vertical direction and welding and joining by staking them to each other, the joined body (synthetic resin joined body) is formed. A sealing portion 140 and joint portions 150 are formed at the joined body.

The sealing portion 140 shown in Fig. 5 seals a periphery of the oil passage 130. The sealing portion 140 is formed by laser-welding the baffle plate 110 and the oil passage forming member 120 on an outer side of the oil passage 130. The sealing portion 140 is formed by laser-welding (the oil passage forming face 112 of) the baffle plate 110 and the welding portion 124 of the oil passage forming member 120 to each other. The sealing portion 140 is formed to lay a closed trail along an outer periphery of the oil passage 130 (surround an entire periphery of the oil passage 130).

The joint portions 150 shown in Fig. 5 join the baffle plate 110 and the oil passage forming member 120 to each other. Each of the joint portions 150 is formed by each of the protruding portions 111 on the baffle plate 110 and each of the through holes 125 in the oil passage forming member 120. To put it concretely, the joint portion 150 is formed by inserting the protruding portion 111 through the through hole 125 and staking the protruding portion 111. The joint portions 150 are formed in positions corresponding to the protruding portions 111 and the through holes 125 (see Fig. 3). To put it concretely, the joint portions 150 are formed on an outer side of the sealing portion 140 (outside an area surrounded with the sealing portion 140 in plan view). In other words, the joint portions 150 are disposed so that the sealing portion 140 is positioned between the oil passage 130 and the joint portions 150 (see Fig. 5). The plurality of joint portions 150 are formed at intervals along an outer periphery of the sealing portion 140.

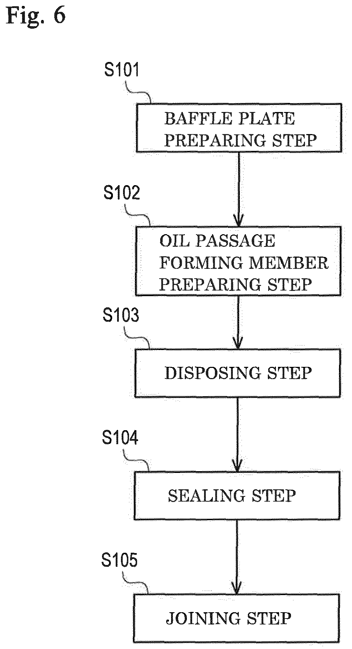

By using Figs. 6 to 9, the method of manufacturing the joined body formed by the baffle plate 110 and the oil passage forming member 120 will be described below in detail. In a manufacturing process of the manufacturing method according to the embodiment, the baffle plate 110 is disposed on a lower side and the oil passage forming member 120 is disposed on an upper side.

The method of manufacturing the joined body formed by the baffle plate 110 and the oil passage forming member 120 according to the embodiment of the invention includes a baffle plate preparing step, an oil passage forming member preparing step, a disposing step, a sealing step, and a joining step.

In the baffle plate preparing step, the baffle plate 110 is prepared (step S101). The baffle plate 110 is made of laser light transmissive synthetic resin. It is essential only that the baffle plate 110 have transmittance of the laser light to be used (laser light of a predetermined wavelength) and the baffle plate 110 having the laser light transmittance not lower than 25% may be used, for example. To put it concretely, as material of the baffle plate 110, polyester resin such as polybutylene terephthalate (PBT) and polyethylene terephthalate (PET), polyolefin resin such as polyethylene and polypropylene, polyamide resin, vinyl chloride resin, fluorine resin, and the like can be used.

In the oil passage forming member preparing step, the oil passage forming member 120 is prepared (step S102). The oil passage forming member 120 is made of laser light absorbing synthetic resin. It is essential only that the oil passage forming member 120 have absorbance of the laser light to be used and the oil passage forming member 120 having the transmittance of the laser light not higher than 5% can be used, for example. To put it concretely, as material of the oil passage forming member 120, the same synthetic resin as that used for the above-described baffle plate 110 into which an absorbent such as carbon black for increasing the absorbance is mixed can be used.

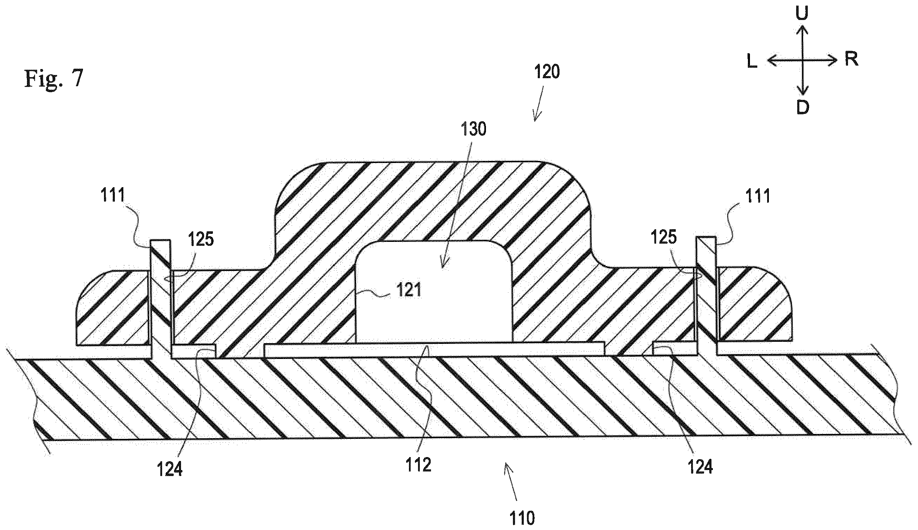

In the disposing step shown in Fig. 7, the baffle plate 110 and the oil passage forming member 120 are disposed (step S103). The baffle plate 110 is disposed with the oil passage forming face 112 facing upward. The oil passage forming member 120 is disposed with its face having the welding portion 124 facing downward. The baffle plate 110 and the oil passage forming member 120 are disposed so that a bottom face of the welding portion 124 comes in contact with the oil passage forming face 112. At this time, the oil passage forming face 112 and the recessed portion 121 are laid over each other to form the oil passage 130.

The baffle plate 110 and the oil passage forming member 120 are disposed so that the plurality of protruding portions 111 are respectively inserted through the plurality of through holes 125. In this way, it is possible to position the oil passage forming member 120 with respect to the baffle plate 110 in a horizontal direction.

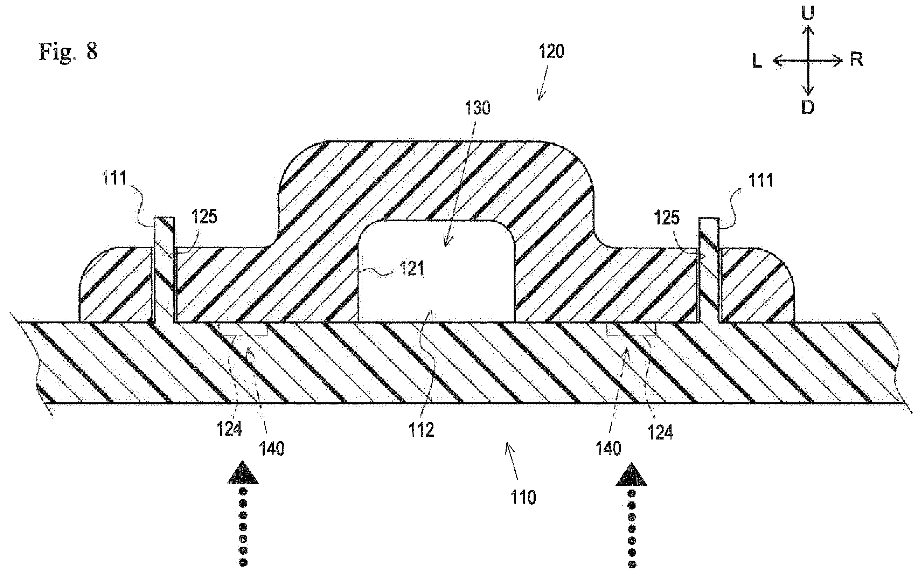

In the sealing step shown in Fig. 8, the periphery of the oil passage 130 is sealed (step S104). By radiating laser light toward the welding portion 124 from below the baffle plate 110, (the bottom face of) the welding portion 124 and (the oil passage forming face 112 of) the baffle plate 110 are laser-welded to each other. A light source of the laser light is not especially restricted and a semiconductor laser, a YAG laser, or the like may be used.

Because the baffle plate 110 is made of the laser light transmissive synthetic resin, most of the laser light radiated from below the baffle plate 110 is not absorbed by the baffle plate 110 and passes through the baffle plate 110. Then the laser light is absorbed by the oil passage forming member 120 made of the laser light absorbing synthetic resin. To put it concretely, the laser light is absorbed by the welding portion 124 near the bottom face of the welding portion 124.

Energy of the laser light absorbed by the welding portion 124 is converted into heat. In this way, the bottom face of the welding portion 124 is heated. When a temperature of the bottom face of the welding portion 124 increases, an area near the oil passage forming face 112 of the baffle plate 110 in contact with the bottom face of the welding portion 124 is also heated due to heat transfer. As a result, a melted layer is formed at a contact portion between the oil passage forming member 120 and the baffle plate 110 (between the bottom face of the welding portion 124 and the oil passage forming face 112 of the baffle plate 110). The melted layer cools down and sets and, as a result, the baffle plate 110 and the oil passage forming member 120 become welded to each other.

In this manner, the sealing portion 140 is formed. The sealing portion 140 is formed at the periphery of the oil passage 130 so as to surround the entire periphery of the oil passage 130. In this way, it is possible to prevent lubricant flowing through the oil passage 130 from leaking outside the sealing portion 140.

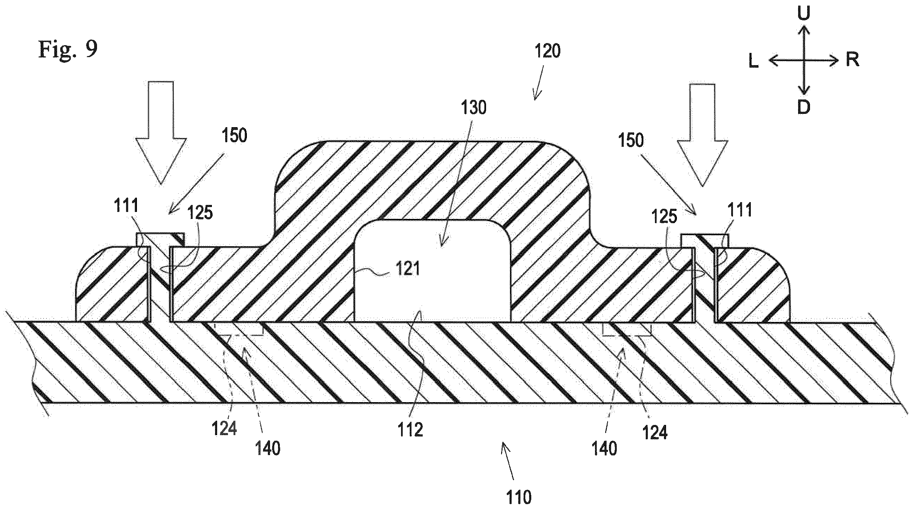

In the joining step shown in Fig. 9, the baffle plate 110 and the oil passage forming member 120 are joined to each other (step S105). This joining is carried out by staking the protruding portions 111 inserted through the through holes 125. As a method of staking, heat staking can be employed. To put it concretely, by pressing a heated die against each of the protruding portions 111 from above, an upper end portion of the protruding portion 111 is heated and pressurized simultaneously. As a result, the upper end portion of the protruding portion 111 is thermally deformed (plastically deformed) so as to spread in the horizontal direction. In this way, the baffle plate 110 and the oil passage forming member 120 are joined to each other by staking.

In this manner, the joint portions 150 are formed. With the joint portions 150, joint strength between the baffle plate 110 and the oil passage forming member 120 is secured. With the joint portions 150, pressure resistance to oil pressure of the lubricant flowing through the oil passage 130 can be secured as well. In other words, it is possible to prevent detachment of the baffle plate 110 and the oil passage forming member 120 from each other due to the oil pressure of the lubricant.

The joined body according to the embodiment has the joint portions 150 formed by the heat staking in addition to the sealing portion 140 formed by the laser welding. The sealing portion 140 seals the periphery of the oil passage 130 to perform a function of preventing the lubricant from leaking outside the sealing portion 140. As a result, the sealing portion 140 joins the baffle plate 110 and the oil passage forming member 120 to each other.

The joint portions 150 join the baffle plate 110 and the oil passage forming member 120 to each other independently of the joining by the sealing portion 140. Therefore, even if the joint strength (pressure resistance to the oil pressure of the lubricant) obtained by the sealing portion 140 is not sufficient, it is possible to secure the sufficient joint strength between the baffle plate 110 and the oil passage forming member 120 with the joint portions 150.

Therefore, it is essential only that the sealing portion 140 be formed to secure sealing performance and the sealing portion 140 need not provide high joint strength. Consequently, the joined body according to the embodiment does not require a large area of the portion to be laser-welded (i.e., area of the bottom face of the welding portion 124). Therefore, it is possible to reduce the area of the portion to be laser-welded to thereby shorten a time required for the laser welding. Moreover, it is unnecessary to increase a laser output.

In the joined body according to the embodiment, the joint portions 150 are formed along the outer periphery of the sealing portion 140. The oil pressure of the lubricant flowing through the oil passage 130 applies a force for rupturing the sealing portion 140 to the sealing portion 140. However, because the joint portions 150 are formed along the outer periphery of the sealing portion 140, a force for resisting the oil pressure of the lubricant is applied to the sealing portion 140. Therefore, it is possible to prevent the sealing portion 140 from being ruptured by the oil pressure of the lubricant.

The joint portions 150 are formed on the outer side of the sealing portion 140. Because the lubricant does not go outside the sealing portion 140, the lubricant does not reach the joint portions 150. Therefore, it is possible to prevent the lubricant from leaking from the joint portions 150 (from the clearance between the outer wall of each of the protruding portions 111 and the inner wall of each of the through holes 125).

As described above, the joined body (synthetic resin joined body) according to the embodiment includes the baffle plate 110 (first synthetic resin part), the oil passage forming member 120 (second synthetic resin part) which comes in contact with the baffle plate 110, the oil passage 130 (flow passage) which is formed between the baffle plate 110 and the oil passage forming member 120 and through which the lubricant (fluid) flows, the sealing portion 140 which is formed by welding the baffle plate 110 and the oil passage forming member 120 to each other on the outer side of the oil passage 130 to seal the periphery of the oil passage 130, and the joint portions 150 for joining the baffle plate 110 and the oil passage forming member 120 to each other.

With this structure, even if the area of the portion to be welded is reduced, it is possible to secure both of the sealing performance of the oil passage 130 and the joint strength between the synthetic resin parts (the baffle plate 110 and the oil passage forming member 120).

Moreover, the sealing portion 140 is disposed so as to be positioned between the oil passage 130 and the joint portions 150.

With this structure, it is possible to prevent the lubricant from reaching the joint portions 150.

The joint portions 150 are disposed along the oil passage 130.

With this structure, it is possible to secure the joint strength between the baffle plate 110 and the oil passage forming member 120 along the oil passage 130.

The joint portions 150 are disposed along the outer periphery of the sealing portion 140.

With this structure, it is possible to secure the joint strength between the baffle plate 110 and the oil passage forming member 120 along the outer periphery of the sealing portion 140.

The baffle plate 110 is disposed on the cylinder head cover 20, the oil passage forming member 120 includes the recessed portion 121 recessed to the opposite side from the baffle plate 110 and the oil passage 130 through which the lubricant flows is formed by the recessed portion 121 and the baffle plate 110 by joining the oil passage forming member 120 to one face of the baffle plate 110.

With this structure, even if the area of the portion to be laser-welded is reduced, it is possible to secure both of the sealing performance of the oil passage 130 and the joint strength between the baffle plate 110 and the oil passage forming member 120.

The method of manufacturing the joined body (synthetic resin joined body) according to the embodiment includes the baffle plate preparing step (transmission-side synthetic resin part preparing step) of preparing the laser light transmissive baffle plate 110 (transmission-side synthetic resin part) including the oil passage forming face 112 (first flow passage forming portion) for forming one part of the oil passage 130 (flow passage) through which the lubricant (fluid) flows, the oil passage forming member preparing step (absorption-side synthetic resin part preparing step) of preparing the laser light absorbing oil passage forming member 120 (absorption-side synthetic resin part) including the recessed portion 121 (second flow passage forming portion) for forming the other part of the oil passage 130 and the welding portion 124 which is formed into the protruding shape at a periphery of the recessed portion 121, the disposing step of disposing the baffle plate 110 and the oil passage forming member 120 so that the oil passage forming face 112 and the recessed portion 121 are laid over each other to form the oil passage 130 and that the welding portion 124 comes in contact with the baffle plate 110, the sealing step of radiating the laser light to the welding portion 124 from the side of the baffle plate 110 to melt the welding portion 124 to thereby weld the welding portion 124 and the baffle plate 110 to each other to seal the periphery of the oil passage 130, and the joining step of joining the baffle plate 110 and the oil passage forming member 120 to each other.

With this structure, even if the area of the portion to be laser-welded is reduced, it is possible to secure both of the sealing performance of the oil passage 130 and the joint strength between the synthetic resin parts (the baffle plate 110 and the oil passage forming member 120).

The baffle plate 110 on which the protruding portions 111 are formed is prepared in the baffle plate preparing step, the oil passage forming member 120 in which the through holes 125 are formed is prepared in the oil passage forming member preparing step, the baffle plate 110 and the oil passage forming member 120 are disposed so that the protruding portions 111 are inserted through the through holes 125 in the disposing step, and the baffle plate 110 and the oil passage forming member 120 are joined to each other by staking the protruding portions 111 in the joining step.

With this structure, the baffle plate 110 and the oil passage forming member 120 can be joined to each other and the baffle plate 110 and the oil passage forming member 120 can be positioned with respect to each other.

In the joining step, an outer portion of the welding portion 124 of the oil passage forming member 120 and the baffle plate 110 are joined to each other.

With this structure, it is possible to prevent the lubricant from reaching the joint portions 150 (portions joined in the joining step).

The oil passage 130 is a passage through which the lubricant flows, the baffle plate 110 is disposed on the cylinder head cover 20, the oil passage forming member 120 forms the oil passage 130 between the baffle plate 110 and itself, and the recessed portion 121 in the oil passage forming member 120 is recessed in the opposite direction to the protruding direction of the welding portion 124.

With this structure, even if the area of the portion to be laser-welded is reduced, it is possible to secure both of the sealing performance of the oil passage 130 and the joint strength between the baffle plate 110 and the oil passage forming member 120.

Although the embodiment of the invention has been described above, the invention is not restricted to the above-described structure and can be changed in various ways without departing from the scope of the invention described in the claims.

For example, though the joined body is formed by joining the baffle plate 110 and the oil passage forming member 120 to each other to form the oil passage 130 through which the lubricant flows between them in the embodiment, the invention is not restricted to it. The joined body may be formed by joining synthetic resin parts other than the baffle plate 110 and the oil passage forming member 120 and a flow passage through which fluid other than the lubricant flows may be formed between the synthetic resin parts.

Although the sealing portion 140 is formed by laser-welding the baffle plate 110 and the welding portion 124 of the oil passage forming member 120 to each other, the invention is not restricted to it. As the welding method of forming the sealing portion 140, it is possible to employ ultrasonic welding, vibration welding, hot plate welding, or the like, besides the laser welding.

Although the joint portions 150 are formed by heat staking of the protruding portions 111 of the baffle plate 110 to the oil passage forming member 120, the invention is not restricted to it. As the method of forming the joint portions 150, it is possible to employ any method by which the baffle plate 110 and the oil passage forming member 120 can be joined to each other. For example, the protruding portions 111 may be snaps (structures each of which can be inserted through a through hole 125 by being elastically deformed and can be staked to an oil passage forming member 120 by being restored to its original shape). As the method of forming the joint portions 150, it is possible to employ other staking methods such as rivet staking.

Although the protruding portions 111 are formed on the baffle plate 110 and the through holes 125 are formed in the oil passage forming member 120 in the joint portions 150, the invention is not restricted to it. For example, protruding portions may be formed on an oil passage forming member 120 and through holes may be formed in a baffle plate 110 in joint portions 150.

Although the recessed portion 121 is formed in the oil passage forming member 120 and the recessed portion 121 and the oil passage forming face 112 of the baffle plate 110 are laid over each other to form the oil passage 130, the invention is not restricted to it. For example, a recessed portion may be formed in a baffle plate 110 and the recessed portion and one face of an oil passage forming member 120 may be laid over each other to form an oil passage 130. Alternatively, recessed portions may be formed in both of a baffle plate 110 and an oil passage forming member 120.

The invention can be applied to the synthetic resin joined body formed by welding the synthetic resin parts to each other and the method of manufacturing the same.

### REFERENCE SIGNS LIST

20: Cylinder head cover
110: Baffle plate (First synthetic resin part) (Transmission-side synthetic resin part)
111: Protruding portion
112: Oil passage forming face (First flow passage forming portion)
120: Oil passage forming member (Second synthetic resin part) (Absorption-side synthetic resin part)
121: Recessed portion (Second flow passage forming portion)
124: Welding portion
125: Through hole
130: Oil passage
140: Sealing portion
150: Joint portion

## Claims

1. A synthetic resin joined body comprising:
a first synthetic resin part;
a second synthetic resin part which comes in contact with the first synthetic resin part;
a flow passage which is formed between the first synthetic resin part and the second synthetic resin part and through which fluid flows;
a sealing portion which is formed by welding the first synthetic resin part and the second synthetic resin part to each other on an outer side of the flow passage to seal a periphery of the flow passage; and
a joint portion for joining the first synthetic resin part and the second synthetic resin part to each other.

2. The synthetic resin joined body according to claim 1, wherein the sealing portion is disposed so as to be positioned between the flow passage and the joint portion.

3. The synthetic resin joined body according to claim 1 or 2, wherein the joint portion is disposed along the flow passage.

4. The synthetic resin joined body according to any one of claims 1 to 3, wherein the joint portion is disposed along an outer periphery of the sealing portion.

5. The synthetic resin joined body according to any one of claims 1 to 4,
wherein the first synthetic resin part is a baffle plate which is disposed on a cylinder head cover,
the second synthetic resin part is an oil passage forming member including a recessed portion recessed to an opposite side from the baffle plate,
the flow passage is an oil passage through which lubricant flows, the oil passage is formed by the recessed portion and the baffle plate by joining the oil passage forming member to one face of the baffle plate.

6. A method of manufacturing a synthetic resin joined body comprising:
a transmission-side synthetic resin part preparing step of preparing a laser light transmissive transmission-side synthetic resin part including a first flow passage forming portion for forming one part of a flow passage through which fluid flows;
an absorption-side synthetic resin part preparing step of preparing a laser light absorbing absorption-side synthetic resin part including a second flow passage forming portion for forming the other part of the flow passage and a welding portion which is formed into a protruding shape at a periphery of the second flow passage forming portion;
a disposing step of disposing the transmission-side synthetic resin part and the absorption-side synthetic resin part so that the first flow passage forming portion and the second flow passage forming portion are laid over each other to form the flow passage and that the welding portion comes in contact with the transmission-side synthetic resin part;
a sealing step of radiating laser light to the welding portion from a side of the transmission-side synthetic resin part to melt the welding portion to thereby weld the welding portion and the transmission-side synthetic resin part to each other to seal a periphery of the flow passage; and
a joining step of joining the transmission-side synthetic resin part and the absorption-side synthetic resin part to each other.

7. The method of manufacturing the synthetic resin joined body according to claim 6,
wherein the transmission-side synthetic resin part on which one of a protruding portion and a through hole is formed is prepared in the transmission-side synthetic resin part preparing step,
the absorption-side synthetic resin part on which the other of protruding portion and the through hole is formed is prepared in the absorption-side synthetic resin part preparing step,
the transmission-side synthetic resin part and the absorption-side synthetic resin part are disposed so that the protruding portion is inserted through the through hole in the disposing step, and
the transmission-side synthetic resin part and the absorption-side synthetic resin part are joined to each other by staking the protruding portion in the joining step.

8. The method of manufacturing the synthetic resin joined body according to claim 6 or 7,
wherein an outer portion of the welding portion of the absorption-side synthetic resin part and the transmission-side synthetic resin part are joined to each other in the joining step.

9. The method of manufacturing the synthetic resin joined body according to any one of claims 6 to 8,
wherein the flow passage is an oil passage through which the lubricant flows,
the transmission-side synthetic resin part is a baffle plate which is disposed on a cylinder head cover,
the absorption-side synthetic resin part is an oil passage forming member for forming the oil passage between the baffle plate and the oil passage forming member, and
the second flow passage forming portion of the oil passage forming member is recessed in an opposite direction to a protruding direction of the welding portion.
